# EUROPÄISCHE PATENTANMELDUNG

(11) **EP 2 182 303 A2**
(43) Veröffentlichungstag der Anmeldung: **05.05.2010**
(21) Anmeldenummer: 09013292.9
(22) Anmeldetag: 21.10.2009
(51) Int. Cl.: F24J 2/52, H01L 31/042

(54) **Montagesystem**

(30) Priorität: 22.10.2008 DE 102008052662
(71) Anmelder: Michelberger Energietechnik GmbH, 88285 Bodnegg (DE)
(72) Erfinder: Michelberger, Markus, 88285 Bodnegg (DE)
(74) Vertreter: Dobler, Markus

(57) **Zusammenfassung**

Es wird ein Montagesystem (1) zur Anordnung photovoltaischer Elemente (2), insbesondere auf einem Hausdach mit geringer Neigung oder Flachdach vorgeschlagen, wobei das Montagesystem (1) Schienenelemente und Modulstützelemente (4, 4a) umfasst, an welchen das photovoltaische Element (2) mittels Befestigungselementen (13) befestigt ist.

Erfindungsgemäß ist das auf einer Aufstellfläche des Hausdaches aufliegende Schienenelement als linear verlaufendes Bodenschienenprofil (3) ausgebildet, welches mittels elastischen Rastelementen (5) mit den Modulstützelementen (4, 4a) verbunden ist.

## Beschreibung

Die Erfindung bezieht sich auf ein Montagesystem zur Anordnung photovoltaischer Elemente nach dem Oberbegriff des Patentanspruchs 1.

### Stand der Technik

Montagesysteme, insbesondere Befestigungskonsolen für Module von Photovoltaikanlagen sind in einer Vielzahl von unterschiedlichen Ausführungsformen bekannt. Dabei ist die Anordnung der Photovoltaikanlage beispielsweise auf Häusern mit einem Flachdach oder mit einem geneigten Dach ein wichtiges Auswahlkriterium für das zu verwendende Montagesystem bzw. für die darunter angeordneten Befestigungskonsolen.

In der Druckschrift DE 203 01 389 U1 ist eine Konsole in Form einer Wanne zur Befestigung von Solarzellen gezeigt, wobei das Solarzellenmodul mittels Klauen auf der Konsole mit einer vorgegebenen Neigung befestigt ist.

Für eine erforderliche Standsicherheit wird die Konsole zusätzlich mit entsprechenden Auflastungsmitteln befüllt, wobei die Konsole auf der Oberfläche eines Hausdachs bzw. eines geneigten Dachs befestigt werden kann.

Dadurch erreicht die Konsole erreicht lediglich im zusammenbau mit einem Solarzellenmodul und entsprechender Auflastung bzw. Befestigung die erforderliche Gesamtstabilität.

Ein Aufbau einer derartigen Konsole ohne ein Solarzellenmodul und ohne Auflastung bzw. Befestigung bildet somit eine nicht ausreichende Stabilität.

Darüber hinaus ist beispielsweise ein Auswechseln eines derartigen Konsolenelements bzw. eine Erweiterung oder Reduzierung der Anlage mit einem erheblichen Montageaufwand verbunden.

Aus diesem Grunde hat sich die Erfindung die Aufgabe gestellt, ein Montagesystem zur Anordnung von photovoltaischen Elementen derart weiterzubilden, dass eine kostengünstige und vereinfache Montage von photovoltaischen Elementen ermöglicht wird.

Zur Lösung der Aufgabe ist die Erfindung durch die Merkmale des Patentanspruchs 1 gekennzeichnet.

Vorteilhafte Erweiterungen der Erfindung sind in den abhängigen Ansprüchen beschrieben.

### Offenbarung der Erfindung

Die Erfindung geht von einem Montagesystem zur Anordnung photovoltaischer Elemente aus, insbesondere auf einem Hausdach mit geringer Neigung oder Flachdach, wobei das Montagesystem Schienenelemente und Modulstützelemente umfasst, an welchen das photovoltaische Element mittels Befestigungselementen befestigt ist.

Der Kern der Erfindung liegt darin, dass das auf einer Aufstellfläche des Hausdaches aufliegende Schienenelement als ein linear verlaufendes Bodenschienenprofil ausgebildet ist, welches mittels elastischen Rastelementen mit Modulstützelexnenten verbunden ist.

Durch das linear verlaufende Bodenschienenprofil ist eine Anordnung von Modulstützelementen an jeder beliebigen Stelle des Bodenschienenprofils möglich.

Darüber hinaus ist es vorteilhaft, dass die elastischen Rastelemente in das U-förmig ausgebildete Bodenschienenprofil derart einrastbar sind, dass eine zusätzliche Befestigung der Modulstützelemente entfällt.

Erfindungsgemäß kann das Rastelement aus einem elastischen Kunststoff gebildet sein, wobei die funktionserzeugende Profilform des Rastelements in Verbindung mit dem Bodenschienenprofil im Vordergrund steht.

In einer bevorzugten Ausgestaltung der Erfindung ist es vorgesehen, dass das elastische Rastelement mittels einer Kipp-, Dreh- oder Drückbewegung in das Bodenschienenprofil einzubringen ist und im verrasteten Zustand die Profilstruktur des Bodenschienenprofils formschlüssig hintergreift.

Ein derartiges Einbringen eines elastischen Rastelementes in das Bodenschienenprofil hat den Vorteil, dass beispielsweise ein nachträgliches Austauschen von Modulstützelementen bzw. eine Anordnung oder Entnahme von Modulstützelementen ohne größeren Montageaufwand durchgeführt werden kann. Ebenso können die entrasteten Modulstützelemente in ihrer Position verschoben werden, und nach erfolgter Positionsjustage erneut eingerastet und somit fixiert werden.

Durch das formschlüssige Hintergreifen des Rastelementes im Bodenschienenprofil wird eine Verbindung gebildet, die auf ein zusätzliches Verbinden der Modulstützelemente mit dem Bodenschienenprofil nicht erfordert.

In einer überdies bevorzugten Ausgestaltung der Erfindung ist es vorgesehen, dass das Montagesystem frei von photovoltaischen Elementen, vollständig selbststehend aufbaubar ist.

Dabei werden die notwendigen Modulstützelemente mittels der elastischen Rastelemente hintereinander in das Bodenschienenprofil durch formschlüssiges Hintergreifen der Profilstruktur selbststehend angeordnet.

Der Aufbau eines vollständig selbststehenden Montagesystems weist den Vorteil auf, dass die beschädigungsempfindlichen photovoltaischen Elemente erst zum Ende des Anlagenaufbaus angeliefert und befestigt werden müssen, wobei beispielsweise eine Erweiterung bzw. Verkleinerung des Montagesystems ohne großen Montageaufwand jederzeit durchführbar ist.

Überdies ist es in einer weiteren Ausgestaltung der Erfindung vorgesehen, dass das Bodenschienenelement in Längsrichtung zwischen zwei angeordneten Modulstützelementen mit einem Abdeckelement abgedeckt ist.

Ein Abdecken der Bodenschienenelemente hat den Vorteil, dass das Bodenschienenprofil nahezu frei von Verschmutzungen für eine eventuelle Erweiterung oder Demontage der photovoltaischen Anlage gehalten werden kann.

Zusätzlich bildet ein mit Abdeckelementen abgedecktes Bodenschienenprofil einen kabelkanalartigen Schutz für Zu- bzw. Ableitungen des photovoltaischen Elements, da das Bodenschienenprofil in der Art einer Kanalführung verwendbar ist.

Vorteilhafterweise weist die auf der Dachoberfläche liegende Profilfläche das Bodenschienenprofils Ausnehmungen auf, welche einen verbesserten Abfluss von eintretenden Verschmutzungen bzw. Feuchtigkeit durch beispielsweise Eis, Schnee oder Regen bereitstellt.

In einer weiteren bevorzugten Ausgestaltung der Erfindung ist es vorgesehen, dass das elastische Rastelement im Bodenschienenprofil längsverschiebbar ist.

Ein längenverschiebbares Rastelement hat den Vorteil, dass bei der Montage einer derartigen photovoltaischen Anlage die Anordnung der photovoltaischen Elemente jederzeit veränderbar ist.

Darüber hinaus ist es denkbar, dass photovoltaische Elemente durch ähnliche Elemente mit veränderten Abmessungen nachträglich ohne größeren Montageaufwand ersetzt bzw. eingesetzt werden können. Eine kombinierte Anordnung von photovoltaischen Elementen mit unterschiedlichen Abmessungen ist ebenfalls mit dem erfindungsgemäßen Montagesystem durchführbar.

Ein weiterer Kern der Erfindung liegt darin, eine Anordnung photovoltaischer Elemente vorzusehen, wobei ein Montagesystem vorhanden ist, welches vor Anordnung eines photovoltaischen Elements vollständig montierbar ist.

Dies hat den Vorteil, dass eine Beschädigung von oftmals teuren photovoltaischen Elementen auf ein Minimum reduziert werden kann, da die photovoltaischen Elemente erst nach Fertigstellung des gesamten Montagesystems auf den Modulstützelementen sicher montiert werden.

In einer weiteren Ausgestaltung der Erfindung zur Anordnung eines Montagesystems ist vorgesehen, dass das Montagesystem befestigungsmittelfrei und/oder auflastungsfrei an einem Hausdach angeordnet ist.

Aufgrund des modulartigen Aufbaus des Montagesystems ohne zusätzliche Befestigungsmittel sind eine Montage/Demontage der Gesamtanlage bzw. eine Verkleinerung oder Erweiterung der Anlage sowie der Austausch von beispielsweise defekten photovoltaischen Elementen jederzeit möglich.

Zusätzlich ist es vorteilhaft, dass das Montagesystem auf zusätzliche Auflastungen, wie beispielsweise eine Kiesaufschüttung oder Betonauflastung im Bereich der Bodenschienenprofile zur Beschwerung der Gesamtanlage bzw. auf eine Befestigung der Bodenschienenprofile auf der Dachoberfläche verzichtet. Hierdurch wird beispielsweise eine kurzzeitige Änderung von Teilbereichen der Anlage oder der Gesamtanlage ermöglicht und es werden Dachbeschädigungen durch Bohrungen vermieden.

In einer überdies bevorzugten Ausgestaltung der Erfindung ist eine Anordnung eines Montagesystems vorgesehen, in welcher das Montagesystem eine zeilen- und spaltenförmige Anordnung von photovoltaischen Elementen ausbildet, wobei zwei benachbarte photovoltaische Elemente entlang einer Spalte auf einem gemeinsamen Schienenelement angeordnet sind.

Die Anordnung zweier benachbarter photovoltaischer Elemente auf einem gemeinsamen Schienenelement hat den vorteil, dass zur Befestigung von photovoltaischen Elementen lediglich ein vorderes und eine hinteres Modulsttltzelement pro Bodenschienenprofil erforderlich ist, um zwei photovoltaische Elemente mit ihren aneinander grenzenden Seiten zu befestigen.

Bei der Montage von photovoltaischen Elementen in einem erfindungsgemäßen Montagesystem ist vorzugsweise vorgesehen, dass die beiden Modulstützelemente unterschiedliche Längen aufweisen, um eine geneigte Anordnung von photovoltaischen Elementen auszubilden.

Dabei sind die Längen derart ausgebildet, dass ein montiertes, photovoltaisches Element eine vorteilhafte Neigung von ca. 30 Grad aufweist, welche eine optimale Sonneneinstrahlung auf das photovoltaische Element gewährleistet.

Es ist denkbar, dass die Länge der Modulstützelemente variabel einstellbar ist. Hierzu wird das Modulstützelement beispielsweise in einer zweigeteilten Ausführungsform gebildet, wobei die sich überlappenden Profilschenkel jeweils eine Ausnehmung und eine länglich verlaufende Ausnehmung aufweisen, die mittels eines Befestigungselements längenvariabel miteinander verbunden werden.

In einer überdies bevorzugten Ausgestaltung der Erfindung ist eine Anordnung eines Montagesystems vorgesehen, wobei jedes photovoltaische Element vorzugsweise mit einem vorderen, mit einem hinteren und im freiliegenden Fall mit einem oder zwei seitlichen Abdeckelementen ausgebildet ist.

Die in der Art einer "Rundum-Verkleidung" ausgebildete Anordnung von photovoltaischen Elementen hat den Vorteil, dass die angeordneten Abdeckelemente bei hohen Windlasten zusätzlich die Funktion von Windleitflächen übernehmen, wodurch die Gefahr eines Abhebens des Montagesystem in Verbindung mit den photovoltaischen Elementen nahezu ausgeschlossen wird.

Die Anordnung von photovoltaischen Elementen mit dem erfindungsgemäßen Montagesystem auf einem Hausdach mit geringer Neigung oder Flachdach ist befestigungsfrei und ohne zusätzliche Auflastung durchführbar.

Weitere Vorteile und Einzelheiten gehen aus den dargestellten Zeichnungen hervor und werden nachstehend näher erläutert. Dabei zeigen:
- Figur 1: eine perspektivische Ansicht eines Montagesystems mit angeordneten photovoltaischen Elementen;
- Figur 2: eine perspektivische Ansicht eines Bodenschienenprofils mit daran angeordneten Modulstützelementen;
- Figur 3: eine Rückansicht eines Montagesystems mit angeordneten Abdeckelementen;
- Figur 4: eine perspektivische Ansicht eines Modulstützelementes mit U-förmigen Rastelement

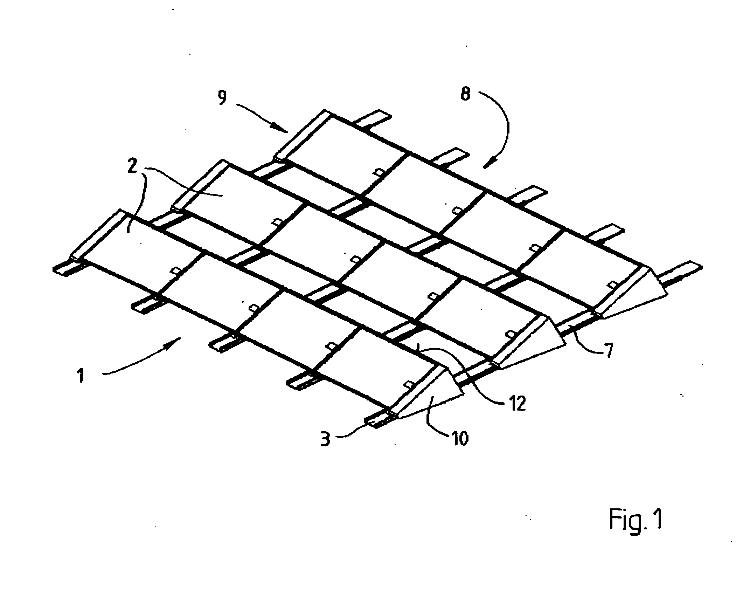

In Figur 1 ist ein Montagesystem 1 mit daran angeordneten photovoltaischen Elementen 2 gezeigt, wobei das Montagesystem 1 auf einem Flachdach eines Hauses bzw. auf einem Dach mit geringer Neigung anzuordnen ist.

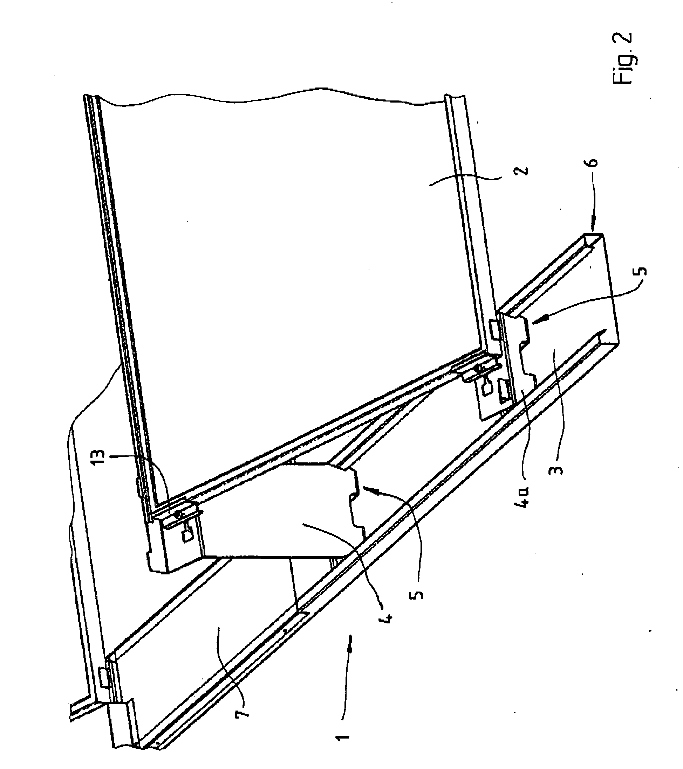

Das Montagesystem 1 umfasst im Wesentlichen parallel zueinander angeordnete Bodenschienenprofile 3, die zur Anordnung von Modulstützelementen 4, 4a (in Figur 2 näher dargestellt) ausgebildet sind.

Die photovoltaischen Elemente 2 sind mit entsprechenden Modulstützelementen 4, 4a verbunden, wobei die photovoltaischen Elemente 2 eine geneigte Anordnung aufweisen, die einer optimalen Sonneneinstrahlung für die photovoltaischen Elemente 2 angepasst ist.

Die photovoltaischen Elemente 2 sind mittels entsprechender Befestigungsmittel 13 an den Modulstützelementen 4, 4a befestigt.

Die photovoltaischen Elemente 2 sind auf dem Montagesystem 1 derart angeordnet, dass diese mit Bezug auf die Bodenschienenprofile 3 eine spaltenförmige sowie eine zeilenförmige Anordnung 8, 9 auf dem Montagesystem 1 bilden.

Die photovoltaischen Elemente 2 bilden in ihrer zeilenförmigen Anordnung 9 einen freiliegenden Abstand auf dem Bodenschienenprofil 3 aus, welcher mit entsprechenden Abdeckelementen 7 abzudecken ist.

Diese Abdeckelemente 7 bilden einen Schutz gegen Verschmutzungen für die Bodenschienenprofile 3 aus.

Darüber hinaus sind die seitlichen Endbereiche in der zeilenförmigen Anordnung 9 der photovoltaischen Elemente 2 jeweils mit seitlichen Abdeckelementen 10 abgedeckt, welche einen zusätzlichen Schutz gegen seitliche Windlasten für das Montagesystem 1 bilden.

In Figur 2 ist eine perspektivische Ansicht eines Bodenschienenprofils 3 gezeigt, wobei das Bodenschienenprofil 3 eine u-förmige Profilstruktur 6 mit jeweils nach innen gerichteten Profilschenkeln aufweist.

Diese Profilstruktur 6 ist zur Aufnahme eines elastischen Rastelementes 5 ausgebildet, welches eine formschlüssige Verbindung mit der Profilstruktur 9 des Modulstützelements 4, 4a bildet.

Das elastische Rastelement 5 weist vorzugsweise eine Rechteckform auf, wobei die Seitenflächen des elastischen Rastelements 5 der Profilstruktur 6 des Bodenschienenprofils 3 angepasst ist.

Das elastische Rastelement 5 ist mittels einer Kipp-, Dreh-oder Drückbewegung in das Bodenschienenprofil 3 einzubringen, wobei das elastische Rastelement 5 aufgrund seines dem Bodenschienenprofil 3 angepassten Außenprofils und seiner Langenabmessungen eine klemmende Funktion mit der Profilstruktur 6 des Bodenschienenprofils 3 ausführt. Hierdurch ist eine befestigungsmittelfreie Anordnung eines Modulstützelementes 4, 4a in dem Bodenschienenprofil 3 ausführbar.

Durch eine entsprechende Kipp- bzw. Drehbewegung ist das Modulstützelement 4, 4a mittels des elastischen Rastelements 5 in dem Bodenschienenprofil 3 längenverschiebbar. Das Modulsttitzelement 4, 4a ist beispielsweise als abgewinkeltes Profilelement ausgebildet, an welchem an der nach unten gerichteten und abgewinkelten Profilfläche das elastische Rastelement 5 angeordnet ist.

Zusätzlich weist das Modulstützelement 4, 4a in seinem vertikal nach oben gerichteten Endbereich eine weitere, abgewinkelte profilfläche auf, welche zur Auflage und Anordnung eines photovoltaischen Elements 2 ausgebildet ist.

Die Befestigung des photovoltaischen Elements 2 auf dem Modulstützelement 4, 4a erfolgt mittels entsprechender Befestigungsmittel 13, die beispielsweise in der Art einer Kralle über ein entsprechendes Befestigungselement in einer angeordneten Ausnehmung auf der abgewinkelten Profilfläche des Modulstützelementes 4, 4a befestigt ist.

Das Modulstützelement 4, 4a weist unterschiedliche Längenabmessungen auf, welche für das photovoltaische Element 2 einen entsprechenden Neigungswinkel für dessen Anordnung auf einem Hausdach ausbilden.

Zwischen den einzelnen, zeilenförmigen Anordnungen 9 der photovoltaischen Elemente 2 weist das Bodenschienenprofil 3 eine nach oben gerichtete Öffnung auf, welche mittels eines Abdeckelements 7 abzudecken ist.

Dieses Abdeckelement 7 ist derart ausgebildet, dass beispielsweise eine formschlüssige Anordnung auf dem Bodenschienenprofil 3 oder eine Anordnung durch Befestigung entsprechender Befestigungselemente erfolgt.

Darüber hinaus ist das Abdeckelement 7 ebenfalls mittels weiterer, aus dem Stand der Technik bekannten Befestigungsformen auf dem Bodenschienenprofil 3 zu befestigen, welche hier nicht näher beschrieben sind.

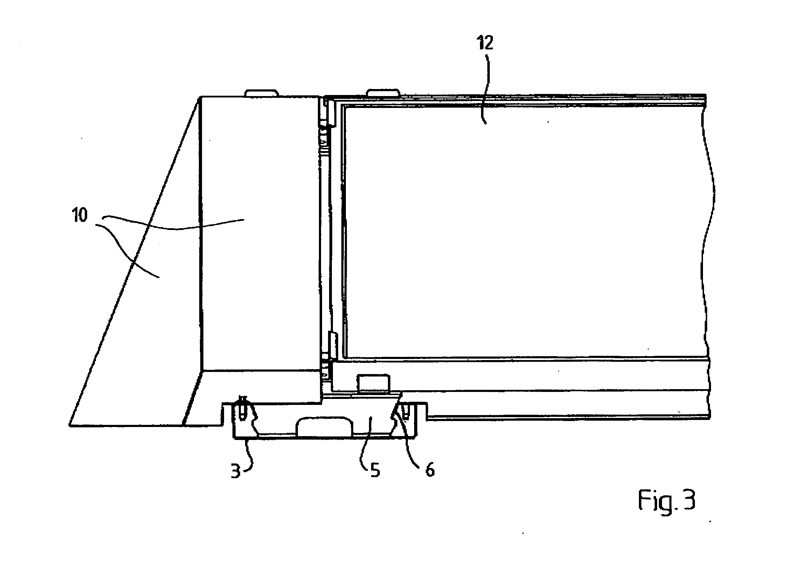

In Figur 3 ist eine rückwärtige Ansicht eines Montagesystems 1 mit angeordneten photovoltaischen Elementen 2 im Endbereich einer zeilenförmigen Anordnung 9 gezeigt.

Das elastische Rastelement 5 steht im formschlüssigen Eingriff mit der Profilstruktur 6 des Bodenschienenprofils 3 und bildet eine in der Art klemmende Befestigung im Bodenschienenprofil 3 aus.

Zum Schutz gegen eventuelle Windlasten sowie Verschmutzungen ist das Montagesystem 1 durch vordere (hier nicht dargestellt), seitliche und hintere Abdeckelemente 10,11 und 12 abgedeckt, wobei das seitliche Abdeckelement 10 jeweils im Endbereich der zeilenförmig 9 angeordneten photovoltaischen Elemente 2 im Montagesystem 1 befestigt ist.

Die Befestigung der Abdeckelemente 10, 11, 12 wird mittels entsprechender Befestigungselemente (hier nicht näher dargestellt) ausgeführt.
Darüber hinaus ist das Montagesystem 1 derart ausgebildet, dass die seitlichen, vorderen und hinteren Abdeckelemente 10, 11, 12 an jedem photovoltaischen Element 2 befestigt werden können.

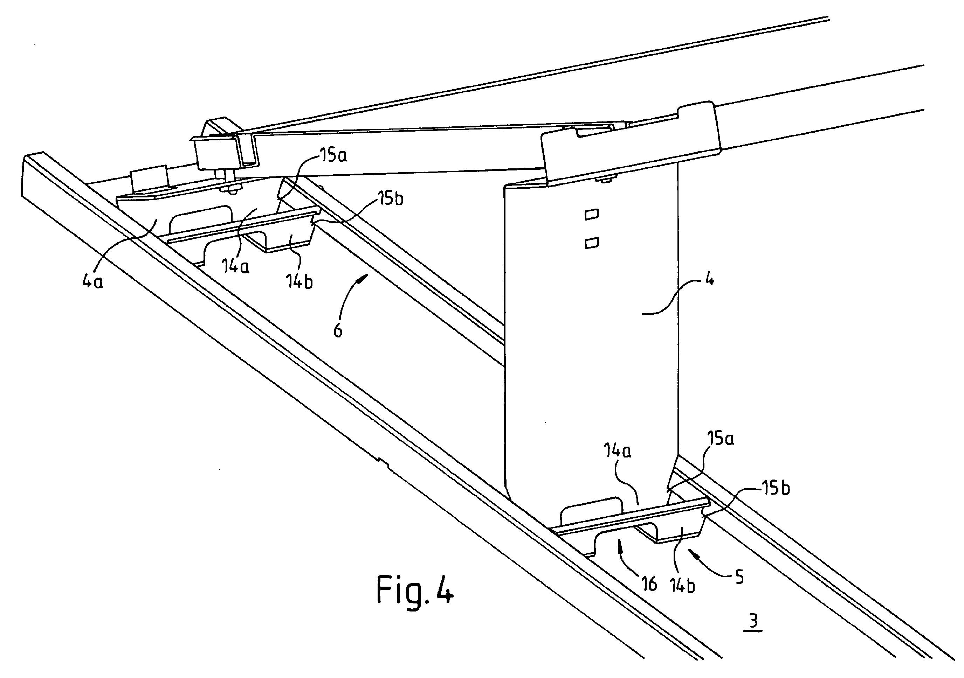

Die Figur 4 zeigt das erfindungsgemäße Montagesystem 1, wobei das im Fußbereich der Modulstütze 4, 4a angeordnete Rastelement 5 U-förmig ausgebildet ist und zwei, in Längsrichtung des Bodenschienenprofils 3 hintereinander liegende Rastschenkel 14a, 14b umfasst. Der Rastschenkel 14a, 14b weist eine nach unten offene Ausnehmung 16 auf, die zur Durchführung von elektrischen Leitungen zum Anschluss der photovoltaischen Elemente 2 verwendbar ist. Die Modulstütze 4, 4a kann von oben in das Bodenschienenprofil 3 eingesetzt werden, wobei die beiden Rastschenkel 14a, 14b mit seitlich an den Rastschenkeln 14a, 14b ausgebildeten Rastvorsprüngen 15a, 15b die Profilstruktur des Bodenschienenprofils 36 formschlüssig hintergreift. Es erfolgt eine form- und kraftschlüssige Verrastung der Modulstütze 4, 4a in dem Bodenschienenprofil 3, da der Rastschenkel 14a, 14b die seitlichen Schenkel des Bodenschienenprofils 3 teilweise nach außen drückt und dieses verspannt. Beispielsweise kann das Modulstützelement 4, 4a zuerst mit dem Rastschenkel 14b von oben in das Bodenschienenprofil 3 eingeführt werden und durch Eindrücken des zweiten Rastschenkels 14a form- und kraftschlüssig fixiert werden.

Mit dem erfindungsgemäßen Montagesystem 1 wird ein befestigungsfreies Montagesystem 1 gebildet, welches aufgrund seines standsicheren Aufbaus ohne zusätzliche Auflastungen, wie beispielsweise Kiesaufschüttungen oder dergleichen auf einem Dach eines Hauses mit geringer Neigung oder auf einem Flachdach eines Hauses aufstellbar ist.

Der Erfindungsgegenstand der vorliegenden Erfindung ergibt sich nicht nur aus dem Gegenstand der einzelnen

Patentansprüche, sondern auch aus der Kombination der einzelnen Patentansprüche untereinander.

Alle in den Unterlagen einschließlich der Zusammenfassung offenbarten Angaben und Merkmale, insbesondere die in den Zeichnungen dargestellte räumliche Ausbildung, werden als Erfindung wesentlich beansprucht, soweit sie einzeln oder in Kombination gegenüber dem Stand der Technik neu sind.

### Bezugszeichenliste:

- 1: Montagesystem
- 2: photovoltaisches Element
- 3: Bodenschienenprofil
- 4: Modulstützelement (Ausleger)
- 4a: Modulstützelement (Stütze)
- 5: Rastelement, elastisch
- 6: Profilstruktur (Bodenschienenprofil)
- 7: Abdeckelement
- 8: spaltenförmige Anordnung
- 9: zeilenförmige Anordnung
- 10: seitliches Abdeckelement, rechts/links
- 11: vorderes Abdeckelement
- 12: hinteres Abdeckelement
- 13: Befestigungsmittel
- 14a: Rastschenkel
- 14b: Rastschenkel
- 15a: Rastvorsprung
- 15b: Rastvorsprung
- 16: Ausnehmung

## Patentansprüche

1. Montagesystem (1) zur Anordnung photovoltaische Elemente (2), insbesondere auf e-inem Hausdach mit geringer Neigung oder Flachdach, wobei das Montagesystem (1) Schienenelemente und Modulstützelemente (4, 4a) umfasst, an welchen das photovoltaische Element (2) mittels Befestigungselementen (13) befestigt ist, **dadurch gekennzeichnet, dass** das auf einer Aufstellfläche des Hausdaches aufliegende Schienenelement als ein linear verlaufendes Bodenschienenprofil (3) ausgebildet ist, welches mittels elastischen Rastelementen (5) mit den Modulstützelementen (4, 4a) verbunden ist.

2. Montagesystem (1) nach Anspruch 1, **dadurch gekennzeichnet, dass** das elastische Rastelement (5) mittels einer Kipp-, Dreh-oder Drückbewegung in das Bodenschienenprofil (3) einzubringen ist und im verrasteten Zustand die Profilstruktur (6) des Bodenschienenprofils (3) formschlüssig hintergreift.

3. Montagesystem (1) nach einem der vorhergehenden Ansprüche, **dadurch gekennzeichnet, dass** das Montagesystem (1), frei von photovoltaischer Elemente (2), vollständig selbststehend aufbaubar ist.

4. Montagesystem (1) nach einem der vorhergehenden Ansprüche, **dadurch gekennzeichnet, dass** das Bodenschienprofil (3) zwischen zwei angeordneten Modulstützelementen (4, 4a) mit einem Abdeckelement (7) abgedeckt ist.

5. Montagesystem (1) nach einem der vorhergehenden Ansprüche, **dadurch gekennzeichnet, dass** das elastische Rastelement (5) im Bodenschienenprofil (3) längenverschiebbar ist.

6. Anordnung photovoltaischer Elemente (2) nach den Ansprüchen 1 bis 5, **dadurch gekennzeichnet, dass** ein Montagesystem (1) vorhanden ist, welches vor Anordnung eines photovoltaischen Elements (2) vollständig montierbar ist.

7. Anordnung nach Anspruch 6, **dadurch gekennzeichnet, dass** das Montagesystem (1) befestigungsmittelfrei und/oder auflastungsfrei auf einem Hausdach angeordnet ist.

8. Anordnung nach Anspruch 7, **dadurch gekennzeichnet, dass** das Montagesystem (1) eine zeilen- und spaltenförmige Anordnung (8, 9) von photovoltaischen Elementen (2) ausbildet, wobei zwei benachbarte photovoltaische Elemente (2) entlang einer spaltenförmigen Anordnung (8) auf einem gemeinsamen Bodenschienenprofil (3) angeordnet sind.

9. Anordnung nach Anspruch 8, **dadurch gekennzeichnet, dass** vorzugsweise jedes photovoltaische Element (2) mit einem vorderen (11), mit einem hinteren (12) und mit mindestens einem seitlichen Abdeckelement (10) ausgebildet ist.
